(19) Europäisches Patentamt
European Patent Office
Office européen des brevets

(11) EP 4 714 902 A1

(12) EUROPÄISCHE PATENTANMELDUNG

(43) Veröffentlichungstag:
**25.03.2026 Patentblatt 2026/13**

(21) Anmeldenummer: **25202388.2**

(22) Anmeldetag: **16.09.2025**

(51) Internationale Patentklassifikation (IPC):
***C01B 32/184*** *(2017.01)* ***C01B 32/194*** *(2017.01)*
***C09C 1/04*** *(2006.01)* ***C09C 1/62*** *(2006.01)*
***C09C 3/08*** *(2006.01)* ***C09C 3/10*** *(2006.01)*

(52) Gemeinsame Patentklassifikation (CPC):
**C09C 1/04; C01B 32/184; C01B 32/194; C09C 1/625; C09C 3/08; C09C 3/10;**
C01P 2004/20; C01P 2004/64; C01P 2006/22; C01P 2006/60; C01P 2006/62

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH LA MA MD TN**

(30) Priorität: **18.09.2024 EP 24201055**

(71) Anmelder: **TMC Technology & Marketing Consulting GmbH**
**47198 Duisburg (DE)**

(72) Erfinder: **KOTHER, Frank**
**47198 Duisburg (DE)**

(74) Vertreter: **Fabry, Bernd**
**IP2 Patentanwalts GmbH**
**Schlossstrasse 523-525**
**41238 Mönchengladbach (DE)**

(54) **ZINKSTAUB MIT VERBESSERTEN FARB- UND GLANZEIGENSCHAFTEN**

(57) Vorgeschlagen wird Zinkstaub mit verbesserten Farb- und Glanzeigenschaften, erhältlich und/oder erhalten gemäß den folgenden Schritten:
(a) Bereitstellen eines industriellen Zinkstaubs mit einem Zinkgehalt von wenigstens 99 Gew.-% und einer Partikelgröße von etwa 20 bis etwa 200 µm;
(b) Bereitstellen eines Dispergiermittels;
(c) Überführen der Komponenten (a) und (b) in eine Rührwerkskugelmühle und
(d) Mahlen und Dispergieren der Mischung aus Schritt (c) über einen Zeitraum von etwa 4 bis etwa 20 Stunden.

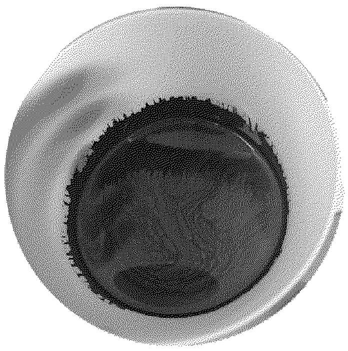

**Abbildung 1A**

Beispiel 1A nach Herstellung

EP 4 714 902 A1

## Beschreibung

### Gebiet der Erfindung

Die Erfindung befindet sich auf dem Gebiet des Korrosionsschutzes und betrifft Zinkstaub in einer verbesserten Darreichungsform, ein Verfahren zu seiner Herstellung sowie seine Verwendung speziell zur Herstellung von Zinkflocken.

### Technologischer Hintergrund

Unter den Korrosionsschutzpigmenten kommt Zink eine besondere Bedeutung zu. Eine bewährte Ausführungsform ist der Einsatz von Zinkstaub, der sowohl in organischen als auch anorganischen Beschichtungen verwendet wird und vor allem zum Schutz von Stahlkonstruktionen oder Stahlbauten über und unter Wasser dient. Effektiver ist es jedoch, statt klassischen Zinkstaub so genannte Zinkflocken ("flakes") zu verwenden. Diese können deutlich niedriger pigmentiert werden, was zu wesentlich geringeren Kosten führt und natürlich auch nachhaltiger ist. Zusätzlich bieten die Flocken einen höheren Barriereschutz durch ihre Anordnung auf der Oberfläche und weisen durch den erhöhten Bindemittel- und Additivanteil eine größere Elastizität und Flexibilität der Grundierung auf. Allerdings ist das industrielle Verfahren zur Herstellung von Zinkflocken mit Zinkstaub, wie er bislang im Handel erhältlich ist, hochpreisig, mit einem hohen Energieaufwand verbunden und liefert Produkte mit geringem Glanz und nicht zufriedenstellenden Farbeigenschaften.

### Stand der Technik

WO 21104975 A1 (JOTUN) stellt eine korrosionsbeständige Beschichtungszusammensetzung bereit, die Folgendes umfasst: (i) ein Bindemittel; (ii) Glasflocken; (iii) Zinkflocken; und (iv) gegebenenfalls Zinkstaub.

**KT 102457706 B1** (KCC) betrifft ein Korrosionsschutzmittel enthaltend 30-50 Gewichtsteile Silikat, 40-60 Gewichtsteile Zinkstaub, 0,1-5 Gewichtsteile eines Viskositätsmittels und 1-5 Gewichtsteile eines Lösungsmittels.

CN 109836964 B (SHANGHAI ZHENHUA) offenbart ein Verfahren zur Herstellung einer Epoxid-Zink/Graphen-Hochleistungs-Antikorrosionsbeschichtung. Graphen und Zinkstaub werden zunächst gemahlen und gemischt, um ein Graphen-Zink-Verbundpulver zu erhalten, und die Oberfläche des Graphen-Zink-Verbundpulvers wird durch die Verwendung von Toluoldiisocyanat modifiziert, um eine Agglomeration zu verhindern.

### Aufgabe der Erfindung

Die Aufgabe der vorliegenden Erfindung hat darin bestanden, Zinkstaub in einer neuen Darreichungsform zur Verfügung zu stellen, der über verbesserte Farb- und Glanzeigenschaften verfügt und sich problemlos, d.h. energieärmer und kosteneffizienter in Rezepturen zur Herstellung von Zinkflocken eiarbeiten lässt. Gleichzeitig sollte mit einem reduziertem Zinkstaubgehalt in den Flocken eine vergleichbare Korrosionsschutzwirkung erzielt werden.

### Beschreibung der Erfindung

Ein erster Gegenstand der Erfindung betrifft Vorgeschlagen wird Zinkstaub mit verbesserten Farb- und Glanzeigenschaften, erhältlich und/oder erhalten gemäß den folgenden Schritten:

(a) Bereitstellen eines industriellen Zinkstaubs mit einem Zinkgehalt von wenigstens 99 Gew.-% und einer Partikelgröße von etwa 20 bis etwa 200 μm;

(b) Bereitstellen eines Dispergiermittels;

(c) Überführen der Komponenten (a) und (b) in eine Rührwerkskugelmühle und

(d) Mahlen und Dispergieren der Mischung aus Schritt (c) über einen Zeitraum von etwa 4 bis etwa 20 Stunden.

In einer bevorzugten Ausführungsform kann dieser Zinkstaub weiterhin Graphen enthalten.

Ein weiterer Gegenstand der Erfindung betrifft Verfahren zur Herstellung von Zinkstaub mit verbesserten Farb- und Glanzeigenschaften, umfassend oder bestehend aus den folgenden Schritten:

(a) Bereitstellen eines industriellen Zinkstaubs mit einem Zinkgehalt von wenigstens 99 Gew.-% und einer Partikelgröße von etwa 20 bis etwa 200 μm;

(b) Bereitstellen eines Dispergiermittels;

(c) Überführen der Komponenten (a) und (b) in eine Rührwerkskugelmühle und

(d) Mahlen und Dispergieren der Mischung aus Schritt (c) über einen Zeitraum von etwa 4 bis etwa 20 Stunden.

Überraschenderweise wurde bei der Mahlung von Zinkstaub mit fortschreitender Verformung der Partikel gefunden, dass der Glanzgrad ansteigt und sich dem konventioneller Zinkflocken annähert. Dabei werden die Zinkpartikel durch den Mahlprozess plättchenförmig verformt und sich somit gerichtet, flach und homogen verteilt auf der Oberfläche angeordnet, wodurch die Reflexion des Lichts verbessert und der glänzende Effekt verstärkt wird. Die Zinkpartikel weisen zu Beginn der Mahlung noch eine eher unregelmäßigere Form auf, weshalb die Lichtreflexion reduziert wird.

Die Bestimmung der Farbwerte zeigt ferner, dass eine längere Mahlung zur Reduktion des L*-Wertes, also der Helligkeit führt. Gleichzeitig steigt der $\Delta E^*$-Wert kontinuierlich an. Dieser Befund deutet auf eine spezifische Veränderung der Form und Struktur der Zinkpartikel hin. Flache Partikel mit höherer Oberfläche bieten mehr Material, welches mit Licht interagieren kann und es effizient absorbiert. Dadurch wird die Streuung reduziert und das System dunkelt sich durch bessere Abdeckung ab. Dass der $\Delta E^*$-Wert kontinuierlich ansteigt, sich somit immer mehr vom Standard entfernt und dem $\Delta E^*$-Wert von konventionellen Zinkflocken annähert, zeigt, dass mit fortlaufender Mahlung immer flachere plättchenförmige Partikel entstehen. Durch ihre gerichtete Anordnung auf der Oberfläche verändert sich auch fortlaufend der Farbton im Vergleich zum Standard.

Während die Variation der Mahlperlen nur einen geringen Einfluss auf den Glanzgrad hat, zeigt sich, dass das System mit dem Einsatz von Stahlperlen stärker abgedunkelt wird als mit Wolframcarbidperlen. Das spricht dafür, dass die charakteristischen Eigenschaften in Bezug auf Form, Oberfläche und Verteilung der Zinkpartikel den der Zinkflocken sehr ähnlich sind.

Mikroskopische Aufnahmen zeigen ferner nicht nur die Bildung von plättchenförmigen Partikeln aus Zinkstaub, sondern auch die Reduktion der maximalen Partikelhöhe durch die gerichtete Anordnung der Flocken auf der Oberfläche. Außerdem verändert sich die Geometrie dieser, wobei das Aspektverhältnis durch die Oberflächenvergrößerung erhöht wird. Der Einsatz von Stahlperlen führt zu einer stärkeren Reduktion der Partikelhöhe als der von Wolframcarbidperlen. Das bestätigt die vorherigen Beobachtungen, dass die Stahlperlen effektiver zur Bildung plättchenförmiger und flacher Partikel beitragen.

## Zinkstaub

Zinkstaub ist ein industrielles Abfallprodukt der Zinkherstellung: Da Rohzink große Mengen Verunreinigungen, insbesondere Blei, Eisen und Cadmium enthält, wird es üblicherweise durch fraktionierte Destillation aufgereinigt. In einer ersten Stufe wird das Rohprodukt so erhitzt, dass nur Zink und Cadmium verdampfen, während Eisen und Blei zurückbleiben. Cadmium und Zink können durch Kondensation voneinander getrennt werden. Dabei kondensiert Zink bei höheren Temperaturen und bildet so 99,99 % reines Feinzink. Cadmium ist leichter flüchtig und wird an einer anderen Stelle als Cadmiumstaub gesammelt. Als Nebenprodukt der Destillation entsteht feinpulvriges Zink, der sogenannte Zinkstaub. Dieser hat eine Reinheit wenigstens 99 Gew.-% und einer Partikelgröße von etwa 20 bis etwa 200 µm, typisch von etwa 50 bis etwa 150 µm.

## Dispergiermittel

Obwohl es grundsätzlich möglich ist, den Zinkstaub auch trocken zu vermahlen, werden im Kontext der vorliegenden Erfindung Dispersionen des Staubs vermahlen. Dabei ist es möglich, zunächst eine Dispersion des Zinkstaubs im Dispergiermittel herzustellen oder vorzugsweise die Dispersionen in-situ während des Mahlens zu erzeugen.

Als bevorzugte Dispergiermittel werden Alkylenglykole oder Alkylenglykolalkylether der Formel (I) einsetzt,

$$R^1(CHR^2CH_2O)_nR^3 \qquad (I)$$

in der $R^1$ und $R^2$ unabhängig voneinander für Wasserstoff oder Methyl stehen, $R^3$ für Wasserstoff oder eine Alkylgruppe mit 1 bis 4 Kohlenstoffen steht und n eine ganze Zahl im Bereich von 10 bis 25 bedeutet. Typische Beispiele sind Ethylenglykol, Diethylenglykol, Triethylenglykol, Propylenglykol, Dipropylenglykol, Butylenglykol, Polyethylenglykole oder Polypropylenglykole mit 3 bis 20 Alkylenglykoleinheiten sowie deren Mischungen und deren Ether mit C1 bis C4 aliphatischen Alkoholen. Besonders bevorzugt sind dabei Methyl- und Butylether der genannten Glykole. Üblicherweise machen die Dispergiermittel etwa 25 bis etwa 75 Gew.-% und insbesondere etwa 45 bis etwa 60 Gew.-% der Dispersion aus.

## Mahlen und Dispergieren

Der Kern der vorliegenden Erfindung liegt wie erläutert darin, kommerziell erhältlichen Zinkstaub unter definierten mechanischen Bedingungen in einer Rührwerkkugelmühle weiter zu zerkleinen, da erst mit der besonders geringen Teilchengröße die spezifischen Anforderungen bei der Herstellung von Zinkflocken erreicht werden.

Beim Dispergieren und Mahlen handelt es sich um zwei unterschiedliche Prozesse in der Materialverarbeitung. Der Dispergierprozess beruht auf der Zerteilung von Agglomeraten in kleinere Agglomerate und Primärteilchen, wobei nur physikalische Bindungen gebrochen werden. Beim Mahlen ist ein deutlich größerer Energieaufwand erforderlich (ungefähr das Zehnfache), da dabei Aggregate zerkleinert werden und somit chemische Bindungen gebrochen werden müssen.

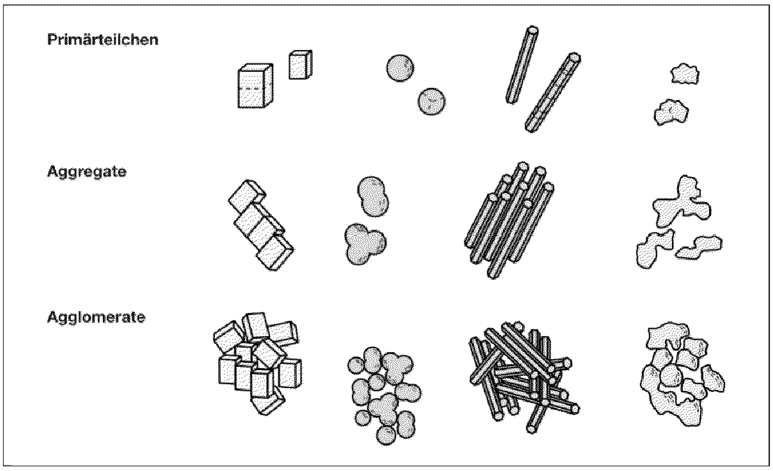


Bei den Primärteilchen handelt es sich um die kleinsten Bestandteile von Pigmenten und Füllstoffen. Wenn die einzelnen Primärteilchen allerdings zusammenwachsen und durch chemische Bindungen zusammengehalten werden, spricht man von Aggregaten. Die Aggregate haben dann eine niedrigere Oberfläche als die Summe der Oberflächen der einzelnen Primärteilchen, da diese flächig miteinander verwachsen. Dagegen handelt es sich bei Agglomeraten um Ansammlungen von Partikeln, die nur durch physikalische Wechselwirkungen zusammengehalten werden. Die Oberfläche der Agglomerate entspricht hierbei der Summe der Oberflächen der enthaltenen Primärteilchen.

Das Ziel beim Mahlen und Dispergieren ist eine möglichst homogene Verteilung eines feinteiligen Feststoffes in einem flüssigen Medium. Dazu müssen die Bindungen zwischen den Partikeln des Feststoffes überwunden werden. Für leicht dispergierbare Pigmente oder zum Vordispergieren ist ein Dissolver meist ausreichend. Für schwere Dispergieraufgaben bzw. Aufgaben mit hohem Anspruch an die Dispergierfeinheit werden sogenannte Rührwerkskugelmühlen eingesetzt. Während bei einem Dissolver keine Mahlkörper zum Einsatz kommen, werden in Rührwerkskugelmühlen Kugeln als Mahlkörper verwendet.

Während des Dispergierprozesses wird zunächst die Oberfläche des Feststoffes, der eingearbeitet werden soll, durch die flüssigen Bestandteile benetzt. Anschließend werden die bis dahin vorhandenen Agglomerate mechanisch in kleinere Agglomerate und Primärpartikel zerteilt. Um Flockung, also eine erneute Zusammenlagerung der Primärpartikel und Agglomerate zu verhindern, müssen diese stabilisiert werden. Dabei spielt das verwendete Dispergiergerät eine eher untergeordnete Rolle. Ausschlaggebend dafür sind die Wechselwirkungen der flüssigen Bestandteile, wie beispielweise Bindemittel, Lösemittel oder Additive, mit den Feststoffteilchen (Pigmente oder Füllstoffe).

Eine Rührwerkskugelmühle umfasst grundsätzlich eine Mahlkammer und einen Mahlrotor. In die Mahlkammer wird das zu dispergierende Produkt sowie die Mahlperlen gegeben. Der motorbetriebene Mahlrotor sorgt dann dafür, dass die Mahlkörperschüttung in Bewegung bleibt. Durch die Versetzung der Mahlkugeln in Translation und Rotation, entsteht die Dispergierwirkung. Dabei stoßen die Kugeln gegeneinander, aber auch gegen die Wände und die sonstigen im Mahlraum vorhandenen Flächen. Die mechanische Zerteilung der Agglomerate findet hauptsächlich durch Druckbeanspruchung (Zerquetschung) und Scherung statt. Dies stellt die räumliche Voraussetzung dar. Außerdem muss eine hohe Belastung als energetische Voraussetzung gegeben sein, um die Agglomerate zerteilen zu können.

In einer bevorzugten Ausführungsform der vorliegenden Erfindung wird für das Mahlen des Zinkstaub seine Prillmühle eingesetzt.

Es wurde festgestellt, dass ein Zusammenhang zwischen der mechanische Rührleistung, die in das Dispergiergut eingebracht wird, und dem Dispergierergebnis besteht. Abhängig von der Rührleistung P wird eine bestimmte Energie vom Mahlrotor an die Mahlperlen und wiederum an das Produkt übertragen. Sie lässt sich wie folgt berechnen:

$$P = 2 \cdot \pi \cdot n \cdot M$$

P Rührleistung [W]

n Drehzahl des Mahlrotors [m/s]

M Erzeugtes Drehmoment [Nm]

Die eingebrachte mechanische Rührleistung sollte möglichst hoch sein, sodass auch die Energie, die in das Dispergiergefäß eingebracht wird, hoch ist. So wird die Wahrscheinlichkeit geringer, dass besonders fest Agglomerate nach dem Dispergierprozess noch nicht dispergiert vorliegen.

Dabei spielt es keine Rolle, ob der Leistungseintrag durch hohe Drehzahlen und niedrigem Drehmoment oder durch niedrige Drehzahlen und hohem Drehmoment erzielt wird. Wenn von einer ausreichenden Menge an Mahlperlen und genügend langer Dispergierdauer ausgegangen wird, sodass alle Partikel einmal in den Bereich der höchsten Energiedichte gelangt sind und sich der Dispergierzustand auch nach höherer Dispergierdauer nicht verändert, ist das Ergebnis nur vom Betrag der mechanischen Rührleistung abhängig. Dagegen ist das Drehmoment auch abhängig vom Fließverhalten des Mahlguts. Mit der Änderung der Viskosität beim Dispergieren bei gleichbleibender Drehzahl, ändert sich auch der Leistungseintrag. Dabei gilt: Je mehr die Viskosität beim Dispergieren ansteigt, desto mehr steigt auch das Drehmoment und somit die mechanische Rührleistung an. Da die Viskosität temperaturabhängig ist, wird der Rührleistungseintrag auch durch die Stärke der Kühlung beeinflusst. Bewährt haben sich Mahlperlen, wie sie in der folgenden **Tabelle A** wiedergegeben sind:

**Tabelle A** Mahlperlen

| **Mahlperlen** | **Hersteller** | **Größe [mm]** | **Dichte [kg/l]** | **Vorteile** |
|---|---|---|---|---|
| ($CeO_2$-stabilisierte) Zirkoniumoxidperlen | ATN Ceram | 3 | 5,9 | Hohe Verschleißbeständigkeit |
| Stahlperlen | - | 2,5 | - | Hohe Härte und Dichte |
| (Zirkoniumoxid/Yttriumstabilisierte) Wolframkarbidperlen | SiLibeads | 1,4- 1,6 | 9,5 ± 0,3 | Hohe Härte, sehr hohe Materialdichte |

Es hat sich als besonders vorteilhaft erwiesen, die Dispersionen über einen Zeitraum von 8 bis 16 Stunden zu mahlen bis auf eine Teilchengröße d50 von weniger als 100 nm erreicht ist.

Bei der Benutzung von Perlmühlen können zudem verschiedene Verfahren zur Feinmahlung der Mahlpaste angewendet werden. Zum einen sind Ein- oder Mehrpassagenverfahren möglich, bei denen die gesamte Mahlpaste, nach einem bzw. jedem Durchgang durch die Mühle, aufgefangen wird. Zum anderen kann die Mahlpaste auch mit Hilfe des Zirkulationsverfahrens vom Auslass der Mahlkammer direkt in den Vorratsbehälter zurückgeführt werden. Durch ein integriertes Pumpsystem wird das Produkt so wiederholt durch die Mahlkammer gepumpt bzw. "im Kreis gefahren".

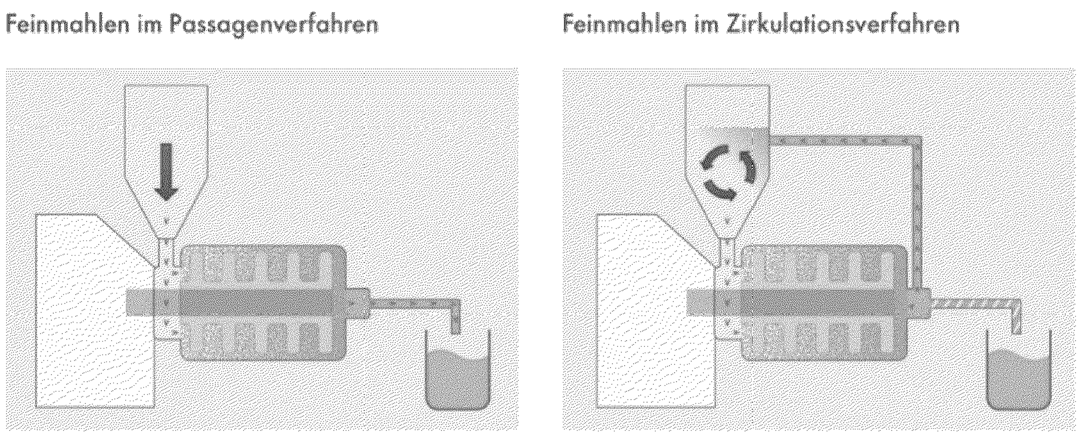


Je nach Dispergieraufgabe wird entschieden, welches Verfahren angewandt wird. Bei leicht zu dispergierenden Agglomeraten ist meist das Einpassagenverfahren ausreichend. Für schwer zu dispergierende Agglomerate ist das Zirkulationsverfahren sinnvoller und effektiver, da dabei jedes Agglomerat räumlich und energetisch beansprucht und dispergiert wird. [15, 21]

## Hilfsstoffe

In einer bevorzugten Ausführungsform der vorliegenden Erfindung kann man das Mahlen und Dispergieren gemäß Schritt (d) in Gegenwart von weiteren Hilfsstoffen durchgeführt werden. Hierfür kommen beispielsweise Fettsäuren, wie insbesondere Stearinsäure in Betracht, die als Schmierstoffe dienen. Aluminiumsilikate können als Flüssigkeitsabsorber eingesetzt werden. In Summe liegt die Menge an Hilfsstoffen bei etwa 1 bis etwa 10 und insbesondere etwa 2 bis etwa 5 Gew.-% - bezogen auf die Dispersion.

## Graphen

In einer besonders bevorzugten Ausführungsform der vorliegenden Erfindung kann als Hilfsstoff Graphen zugesetzt werden. Beim Graphen handelt es sich um eine Kohlenstoffmodifikation, bei der jedes Kohlenstoffatom im Winkel von 120° über Atombindungen mit drei weiteren verbunden ist, so dass sich ein bienenwabenförmiges Muster ausbildet. Darüber hinaus ist jedes Kohlenstoffatom auch an einer Doppelbindung beteiligt. Die Elektronen dieser Doppelbindungen, die $\pi$-Elektronen, sind jedoch vollständig delokalisiert, das heißt frei über die gesamte Wabenstruktur beweglich. Insgesamt handelt es sich bei der Graphenstruktur um eine Verknüpfung sehr vieler Benzolringe zu einer durchgehenden Fläche.

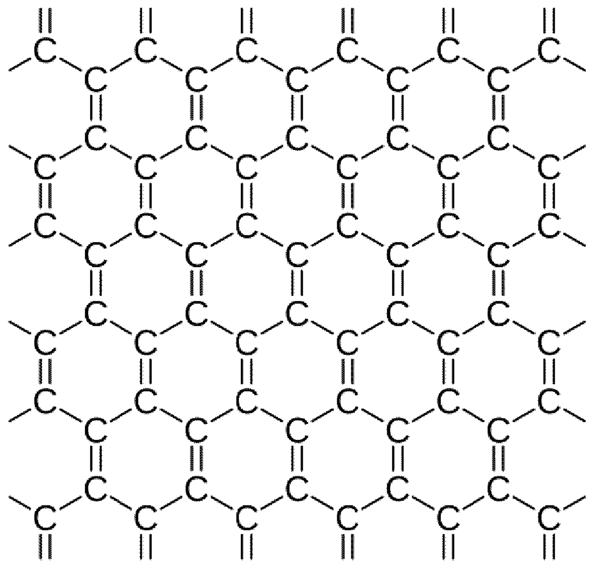

Graphen lässt sich damit als Extremfall eines polycyclischen aromatischen Kohlenwasserstoffs beschreiben. Aufgrund der durchgehenden Verknüpfungen in den Flächen sind jedoch dort gar keine Wasserstoffatome gebunden. Nur an den Rändern des Wabengitters sind zum Erreichen der Vierbindigkeit der C-Atome, weitere Bindungspartner, beispielsweise Wasserstoffatome, vorhanden. Gemessen an der Größe des Gesamtmoleküls haben sie kaum Einfluss auf die Eigenschaften des Graphens.

Auch hier ist es möglich, das Graphen als solches zusetzen und die Dispersion in situ zu erzeugen, vorzugsweise arbeitet man aber in diesem Fall mit Graphen-Dispersionen. Als Dispergiermittel eignen sich wiederum die bereits vorbeschriebenen nichtionischen Produkte. Ein weiterer Gegenstand der Erfindung betrifft daher eine Dispersion von Graphen in einem Dispergiermittel, wobei das Dispergiermittel ein Alkylenglykol oder ein Alkylenglykolalkylether der Formel (I) darstellt,

$$R^1(CHR^2CH_2O)_nR^3 \qquad (I)$$

in der $R^1$ und $R^2$ unabhängig voneinander für Wasserstoff oder Methyl stehen, $R^3$ für Wasserstoff oder eine Alkylgruppe mit 1 bis 4 Kohlenstoff steht und n eine ganze Zahl im Bereich von 10 bis 25 bedeutet. Der mit der Auswahl dieser Dispergiermittel verbundene Vorteil besteht darin, dass die Dispersionen besonders stabil sind und es insbesondere nicht zu unerwünschter Agglomeration kommt. Graphendispersionen mit besonderer Stabilität enthalten Graphen und Dispergiermittel üblicherweise in Mengenverhältnissen von etwa 5:95 bis 30:70 und insbesondere etwa 10:90 bis 25:75.

Der Zusatz von Graphen zu den Zinkstaubdispersionen verbessert in der Anwendung den kathodischen Schutz von zinkhaltigen Epoxidbeschichtungen. Insbesondere zeigt sich, dass die Barriereeigenschaften mit der Zugabe von Graphen deutlich verbessert wird. Die stabile Einarbeitung von Graphen in Korrosionsschutzsysteme erweist sich bisher als schwierig. Hier leistet die vorliegende Erfindung einen weiteren Fortschritt, denn sowohl Graphen als auch Graphendispersionen lassen sich einfach und mit geringem Energieeintrag zusammen mit dem Zinkstaub vermahlen und ergeben lagerstabile Dispersionen. Hierzu reichen bereits geringe Mengen von typisch etwa 1 bis etwa 15 Gew.-% und insbesondere etwa 5 bis etwa 10 Gew.-% bezogen auf den Zinkgehalt der Dispersionen.

## Gewerbliche Anwendbarkeit

Zwei weitere Gegenstände der Erfindung betreffen ferner zum einen Zinkflocken enthaltend oder bestehend aus dem Zinkstaub wie oben beschrieben sowie zum anderen die Verwendung des Zinkstaubs nach Anspruch 1 zur Herstellung von Zinkflocken.

## BEISPIELE

Gegenstand des folgenden Experimentellen Teils ist die Herstellung von verschiedenen Graphen-Dispersionen und die Mahlung von Zinkstaub durch Verwendung von Rührwerkskugelmühlen. Dabei wird die Verformung der Zinkpartikel durch die Mahlung unter verschiedenen Parametern beobachtet und optimiert. Die Performance der gemahlenen Zinkstaubpartikel wird mit konventionellen Zinkflocken verglichen. Anschließend erfolgt die Rezeptierung der verschiedenen Lacksysteme mit Zusatz von verschiedenen Graphen-Konzentrationen. Die Korrosionsschutzwirkung wird mit

analytischen Methoden ausgewertet.

**Beispiel 1**

*Herstellung von Graphen-Dispersionen*

Für die Herstellung der Dispersionen wurden zwei verschiedene Graphentypen verwendet. Bei dem ersten Graphentyp handelte es sich um ein mit Bariumsulfat trockenvermahlenes Halbfabrikat der Firma Direkta Plus, welches einen Graphengehalt von 10 % aufwies (Grafyshield G+). Dies Produkt weist 3 bis 5 Graphenlagen auf und lässt sich sowohl in wasserbasierte als auch in lösemittelhaltige Systeme einarbeiten. Der zweite Graphentyp (MPCO 2320) wurde von der Firma Morion Nanotech bezogen. Dabei handelt es sich um ein reines Graphenpulver. Für die Herstellung der Dispersionen wurden die beiden folgenden Rezepturen gemäß **Tabelle 1** verwendet. Beispiel 1A betrifft eine trockenvermahlene, Beispiel 1A eine "pure" Dispersion.

**Tabelle 1**

| Graphen-Rezepturen | | | |
|---|---|---|---|
| **Komponente** | **Stoff** | **1A** | **1B** |
| Grafshield G+ | Graphen | 20 | - |
| MPCO 2320 | Graphen | - | 13 |
| Dowanol PnB | Propylenglykol-n-butylether | 50 | 62 |
| CliqSperse 149 | Modifizierter Polyglykolether | 30 | 25 |

Für den Dispergierprozess wurden Zirkoniumperlen mit einem Durchmesser von 0,6-0,8 mm verwendet. Als Mühle wurde eine Rührwerkskugelperlmühle eingesetzt, in der die Graphenpasten bei 8000 Umdrehungen pro Minute für 4 Stunden mit einer 40 mm Doppel-PTFE-Mahlscheibe dispergiert werden.

**Beispiel 2**

*Charakterisierung und Analyse der Graphendispersionen*

Eine gute Lagerstabilität von Dispersionen ist von zentraler Bedeutung für zahlreiche Anwendungen. Die ungleichmäßige Verteilung von Partikeln sowie unerwünschte Aggregation, beeinflusst bedeutsam die Qualität von Dispersionen. Um die Stabilität zu beurteilen, wurden die Dispersionen optisch bewertet und rheologische Untersuchungen durchgeführt.

Optische Bewertung

Um die Stabilität der hergestellten Graphendispersionen zu überprüfen, wurden diese direkt nach der Herstellung und nach 8 Wochen Lagerung bei Raumtemperatur aufgerührt und optisch bewertet. Die Ergebnisse finden sich in **Abbildung 1.**

Nach der visuellen Beurteilung der Dispersionen kann festgestellt werden, dass sich im Beispiel 1A nach 8 Wochen Lagerung ein leichter Bodensatz gebildet hat, welcher sich allerdings durch leichtes Aufrühren wieder homogenisieren ließ. Diese Beobachtung deutet darauf hin, dass es zu einer geringfügigen Aggregation gekommen sein könnte. Der Ansatz gemäß Beispiel 1B zeigte sowohl unmittelbar nach der Herstellung als auch nach 8 Wochen Lagerung keinen Bodensatz. Eine gravierende Aggregation kann somit ausgeschlossen werden.

Rheologische Untersuchungen

Um eine detaillierte Einschätzung der Stabilität und Strukturveränderungen der Dispersionen vornehmen zu können, wurde die Viskosität bestimmt. So kann beispielsweise ein signifikanter Anstieg der Viskosität bei ansteigenden Scherraten auf eine verstärkte Aggregation der Partikel hinweisen. Für die Messung wurde das Rheometer Modular Compact Rheometer MCR 102e der Firma Anton Paar verwendet und die Viskosität bei auf- und absteigender Scherrate bestimmt. Damit kann die Reaktion der Probe auf ansteigende Scherkraft, sowie das Rückstellverhalten der Probe bei Reduzierung der Scherrate erfasst werden. Zur Auswertung wurde der Logarithmus der Scherrate gegen die Viskosität in einem Diagramm aufgetragen. Das logarithmische Maß ermöglicht eine verbesserte Darstellung der Veränderungen über

einen breiten Scherbereich. Es wurde jeweils der Viskositätsverlauf der Dispersion direkt nach der Herstellung und nach 8 Wochen Lagerung verglichen. Die Messkurven sind in den **Abbildungen 2 und 3** wiedergegeben.

Beide Dispersionen zeigten ein ähnliches Verhalten. Der anfängliche Abfall der Viskosität mit ansteigender Scherrate weist auf ein pseudoplastisches Verhalten hin. Außerdem ist ein thixotropes Verhalten anzunehmen, da sich die Viskosität mit abnehmender Scherrate wieder erhöht. Das liegt an der Strukturstärke der Dispersion, die sich in der Scherbelastungsphase zunächst verringert und in der Ruhephase allmählich wieder aufbaut, wodurch die Viskosität wieder ansteigt. Dass die Viskositätskurven beider Dispersionen nach der Herstellung und nach 8 Wochen Lagerung einen sehr ähnlichen Verlauf aufweisen, deutet darauf hin, dass die Dispersionen langfristig stabil sind und sich ihre rheologischen Eigenschaften mit der Zeit nicht signifikant ändern. Es kann somit angenommen werden, dass die Dispersionen wenig anfällig für Aggregation sind.

**Beispiel 3**

*Mahlung von Zinkstaub*

Für die Mahlung des Zinkstaubs wurden zwei verschiedene Zinkstaubtypen verwendet. Der erste Zinkstaubtyp wurde von der Firma Kymera bezogen. Dabei handelte es sich um stabilisierten Zinkstaub (ECKA-Zink), welcher eine Partikelgröße von höchstens 45 μm und einen Zinkgehalt von mindestens 99 % aufwies. Der zweite Zinkstaub von der Firma IMR Metalle wies eine Partikelgröße von höchstes 150 μm und einen Zinkgehalt von mindestens 99,995 % auf. Damit eine aussagekräftige Bewertung der hergestellten Zinkflocken aus den aufgeführten Zinkstaubtypen möglich ist, wurden diese mit den industriell hergestellten Zinkflocken ProFlake Zn 2000 der Firma Eckart als Referenzprobe verglichen.

**Tabelle 2**

| Rezeptierung der Zinkstaubtypen und -flocken | | | |
|---|---|---|---|
| **Beispiel** | **2A** | **2B** | **V1** |
| Dowanol PnB | 55 | 55 | 57 |
| Stearinsäure 12-HSA | 2 | 2 | - |
| Alumosilikat | 3 | 3 | 3 |
| IMR-Zinkpulver | 40 | - | - |
| ECKA-Zink | - | 40 | - |
| ProFlake Zn 2000 | - | - | 40 |

Um diese Rezeptur in verschiedenen Lacksystemen verwenden zu können, wurde ebenfalls Dowanol Pnb ALS Lösungsmittel eingesetzt. Das Alumosilikat Sylosiv A3 diente als Feuchtigkeitsabsorber und wurde typischerweise in Beschichtungen mit metallischen Pigmenten eingesetzt. Die Stearinsäure 12-HSA wurde als Schmiermittel für der Mahlung der Zinkpartikel verwendet.

Für die Mahlung des Zinkstaubes wurden verschiedene Parameter geprüft. Unter anderem wird die Mahldauer, die Umdrehungen pro Minute sowie Art, Größe und Menge der Mahlperlen variiert, um die Mahlung zu optimieren. Dazu wurde eine Rührwerkskugelmühle mit einer 40 mm Doppel-PTFE-Mahlscheibe verwendet. Die Ansätze werden bei 4000 Umdrehungen pro Minute für 16 Stunden gemahlen. Es wurden alle in Tabelle 1 aufgeführten Mahlperlen in einem 1:1 Volumenverhältnis zum Mahlansatz getestet. Alle zwei Stunden wurde eine Probe aus dem Mahlansatz gezogen, welche mit einer Stabrakel auf schwarz-weiß Karton mit einer Nassschichtdicke von 200 μm aufgezogen wurde. Um optische Veränderungen des Films besser beurteilen zu können, wurde der Zinkgehalt vor dem Aufziehen mit einer Celluloseacetatbutyrat-Lösung auf 2% reduziert. Die Zinkflocken ProFlake Zn 2000 wurden nach der angegebenen Rezeptur wenige Minuten mittels Dissolver eingerührt und ebenfalls mit einem Zinkgehalt von 2% auf schwarz-weiß Karton aufgezogen.

**Beispiele 3 bis 26, Vergleichsbeispiele V2 und V3**

*Charakterisierung und Analyse des Zinkstaubs*

Um die Veränderung der Zinkpartikel mit fortschreitender Mahlung zu untersuchen, wurde der Glanz gemessen. Der Fokus lag hierbei auf der Verformung der Zinkstaubpartikel und der damit einhergehenden Oberflächenvergrößerung.

Glanz bezeichnet eine optische Eigenschaft von Oberflächen, welche auf der Reflexion von Lichtstrahlen an der Grenzfläche zur Luft beruht. Je mehr die Lichtstrahlen mit gleichem Winkel von der Oberfläche gespiegelt werden, das heißt je gerichteter die Reflexion ist, desto höher ist der Glanz. Bei glatten Oberflächen ist der Glanz dementsprechend höher als bei rauen Oberflächen. Bei rauen Oberflächen wird ein größerer Anteil der Lichtstrahlen diffus, das heißt in alle Richtungen, reflektiert. Daraus folgt, dass fein gemahlene oder plättchenförmige Partikel einen höheren Glanz aufweisen als grobe Partikel, da sie eine größere Oberfläche haben und die Reflexion des Lichtstrahls auf der Oberfläche somit gerichteter ist. Für die Messung wurde das Messgerät "BYK micro-TRI-gloss" verwendet. Nach DIN EN ISO 2813 wurde eine Dreifachbestimmung durchgeführt und der Glanzgrad mit Hilfe von drei verschiedenen Messwinkeln gemessen. Für die Auswertung wird nur der 60°- Messwinkel berücksichtigt, da die Oberfläche halbglänzend ist. Es wurde der Glanzgrad der Mahlansätze nach 30 Minuten, acht und 16 Stunden bestimmt und mit dem Glanzgrad der konventionellen Zinkflocken (V2) verglichen. Die Ergebnisse sind in **Tabellen 3A und 3B** dargestellt:

**Tabelle 3A**

| Glanzgrade Zinkpulver nach Beispiel 2A | | | | | | | |
|---|---|---|---|---|---|---|---|
| | **3** | **4** | **5** | **6** | **7** | **8** | **V2** |
| Mahldauer [h] | 0.5 | 0.5 | 8 | 8 | 16 | 16 | - |
| Material der Mahlperlen | WC | Stahl | WC | Stahl | WC | Stahl | - |
| Glanz 60° [GU] | 17,3 | 17,9 | 27,6 | 25,2 | 33,8 | 34,3 | 39,3 |

Die Ergebnisse zeigen einen klaren Anstieg des Glanzgrades mit fortschreitender Mahlung des IMR Zinkpulvers gemäß Beispiel 2A. Nach 16 Stunden Mahlung weist der Ansatz einen ähnlichen Glanzwert wie die industriell hergestellten Zinkflocken ProFlake Zn 2000 auf. Diese Beobachtung deutet darauf hin, dass die Verformung der Zinkpartikel während des Mahlprozesses zu einer signifikanten Oberflächenvergrößerung und Reduzierung der Partikelhöhe geführt hat. Durch eine gerichtete Anordnung der Partikel auf dem Substrat wird die Oberfläche insgesamt flacher und die Lichtreflexion verbessert. Die Oberflächenbeschaffenheit der Zinkstaubpartikel nähert sich mit fortlaufender Mahlung charakteristisch derjenigen der Zinkflocken an.

Trotz der Verwendung unterschiedlicher Mahlperlen zeigen die Ergebnisse der Glanzgradmessung, dass die Variation der Mahlperlen nicht wesentlich zu unterschiedlichen Glanzgraden führt. Die Mahldauer hat einen stärkeren Einfluss auf den Glanzgrad als die spezifische Wahl der Mahlperlen.

**Tabelle 3B**

| Glanzgrade Zinkpulver nach Beispiel 2B | | | | | | | |
|---|---|---|---|---|---|---|---|
| | **9** | **10** | **11** | **12** | **13** | **14** | **V2** |
| Mahldauer [h] | 0.5 | 0.5 | 8 | 8 | 16 | 16 | - |
| Material der Mahlperlen | WC | Stahl | WC | Stahl | WC | Stahl | - |
| Glanz 60° [GU] | 25,6 | 23,1 | 30,0 | 35,4 | 41,2 | 41,6 | 39,3 |

Ein Vergleich zwischen dem IMR Zinkpulver (Beispiel 2A) und dem Zinkstaub von ECKA (Beispiel 2B) zeigt ähnliche Muster in Bezug auf die Mahldauer und den Glanzgrad. Auch hier kann angenommen werden, dass die Mahldauer einen größeren Einfluss auf den Glanzgrad hat als die Variation der Mahlperlen. Auffällig ist, dass der Glanzgrad des ECKA-Zinkstaubs nicht nur insgesamt höher ist, sondern auch höher ausfällt als der Glanzgrad der Zinkflocken.

Bestimmung der Farbwerte

In der Farbmessung spielt das CIE-Lab*-Farbsystem eine wichtige Rolle, da es eine standardisierte Methode zur Darstellung von Farben in einem dreidimensionalen Raum darstellt. Durch die drei Hauptkomponenten L* (Helligkeit), a* (Rot-Grün-Verschiebung) und b* (Blau-Gelb-Verschiebung) ermöglicht dieses System eine exakte Charakterisierung von Farben. **In Abbildung 4** ist der L*a*b*-Farbraum schematisch dargestellt.

Zusätzlich kann auch die Komponente ΔE* angegeben werden, welche den Unterschied zwischen zwei Farben bzw. deren Farbabstand angibt.

Zur Auswertung wurden die L*- und ΔE*-Werte der Mahlansätze nach 30 Minuten, acht und 16 Stunden

gemessen und mit den Farbwerten des Standards und den Zinkflocken ProFlake Zn 2000 verglichen. Für die Messung wurde das Gerät Color i 5 der Firma x-rite verwendet und jeweils eine Zweifachbestimmung durchgeführt. Die Ergebnisse sind in den **Tabellen 4A und 4B** sowie den **Abbildungen 5 bis** 8 wiedergegeben:

**Tabelle 4A**

| Farbwerte Zinkpulver nach Beispiel 2A | | | | | | | | |
|---|---|---|---|---|---|---|---|---|
| | **Kontrolle** | **15** | **16** | **17** | **18** | **19** | **20** | **V3** |
| Mahldauer [h] | - | 0,5 | 0,5 | 8 | 8 | 16 | 16 | - |
| Material Mahlperlen | - | WC | Stahl | WC | Stahl | WC | Stahl | - |
| L*-Wert | 92,18 | 90,84 | 87,68 | 82,32 | 77,41 | 75,03 | 73,94 | 71,6 |

**Tabelle 4B**

| Farbwerte Zinkpulver nach Beispiel 2B | | | | | | | | |
|---|---|---|---|---|---|---|---|---|
| | **Kontrolle** | **21** | **22** | **23** | **24** | **25** | **26** | **V3** |
| Mahldauer [h] | - | 0,5 | 0,5 | 8 | 8 | 16 | 16 | - |
| Material Mahlperlen | - | WC | Stahl | WC | Stahl | WC | Stahl | - |
| L*-Wert | 92,18 | 90,12 | 90,49 | 78,69 | 83,53 | 77,57 | 72,62 | 71,6 |

Während des Mahlungsprozesses der verschiedenen Zinkpulver mit Wolframcarbidperlen zeigte sich eine tendenzielle Zunahme der ΔE*-Werte in Abhängigkeit zum Standard und der gleichzeitige Abfall der L*-Werte. Die industriell hergestellten Zinkflocken ProFlake Zn 2000 wiesen den höchsten ΔE*-Wert und den geringsten L*-Wert im Vergleich zum Standard auf. Die Farbwerte der Mahlansätze näherten sich mit zunehmender Mahlung jedoch denjenigen der Zinkflocken an. Das zeigt, dass sich die Oberfläche der Zinkstaubpartikel durch den Mahlungsprozess vergrößert und die Absorption des Lichts verstärkt wird, was zur Abdunkelung der Beschichtung führt. Bei der Verwendung von Stahlperlen ist die Entwicklung der L*- und ΔE*-Werte sehr ähnlich, wobei eine minimal stärkere Reduktion des L*-Wertes zu sehen ist. Die Mahlung mit Stahlperlen erweist sich effektiver als die Mahlung mit Wolframcarbidperlen.

Mikroskopische Betrachtung

Um einen Einblick in die mikroskopische Struktur des Zinkstaubs zu gewinnen, wurde ein Mikroskop vom Typ KEYENCE VHX 5000 mit einem VH-Z500 Objektiv eingesetzt. Damit können wichtige Faktoren wie Partikelgröße, Form, und Verteilung im Mahlprozess von Zinkstaub festgestellt werden. Die Analyse der Mikroskop-Aufnahmen erfolgte mit besonderem Augenmerk auf die Entwicklung plättchenförmiger Partikel. Dazu wurden die Mahlansätze nach 30 Minuten und nach 16 Stunden Mahlung verglichen. Die Aufzüge wurden mit 500-facher Vergrößerung betrachtet. Zusätzlich wurden die Ansätze mit 1000-facher Vergrößerung als 3D- Modell dargestellt und die maximale Höhe der Partikel bestimmt, um Unebenheiten auf der Oberfläche charakterisieren zu können. Die Ergebnisse den **Abbildungen 9A bis 9D** sowie **10A-B und 11A-B** wiedergegeben.

Die Auswertung der Mikroskop-Aufnahmen zeigt eine signifikante Änderung in der Oberflächenbeschaffenheit während des Mahlprozesses von IMR-Zinkpulver mit Wolframcarbidperlen. Zu Beginn der Mahlung ist eine auffällig raue Oberfläche zu erkennen, wobei die Partikel deutlich aus der Oberfläche herausragen. Mit Hilfe der 3D-Darstellung konnte die maximale Partikelhöhe quantifiziert werden. Dabei zeigte sich nach 16 Stunden Mahlung eine Reduktion der maximalen Partikelhöhe um 18 %. Diese strukturellen Veränderungen zeigen eine fortschreitende Umwandlung des kugelförmigen Zinkstaubs in eine plättchenförmige, flachere Struktur. Auch bei der Verwendung von Stahlperlen kann die Bildung von plättchenförmigen Zinkpartikeln festgestellt werden. Die maximale Höhe der Partikel in der Beschichtung wurde um 33 % reduziert.

Es ist eine deutliche Ähnlichkeit zwischen den industriell hergestellten Zinkflocken und den hergestellten plättchenförmigen Partikeln aus Zinkstaub zu erkennen. Dies stützt die Annahme, dass die angewandten Mahlparameter effektiv zur Bildung von Zinkflocken aus Zinkstaub führen.

**Patentansprüche**

**1.** Zinkstaub mit verbesserten Farb- und Glanzeigenschaften, erhältlich und/oder erhalten gemäß den folgenden

Schritten:

(a) Bereitstellen eines industriellen Zinkstaubs mit einem Zinkgehalt von wenigstens 99 Gew.-% und einer Partikelgröße von etwa 20 bis etwa 200 µm;
(b) Bereitstellen eines Dispergiermittels;
(c) Überführen der Komponenten (a) und (b) in eine Rührwerkskugelmühle und
(d) Mahlen und Dispergieren der Mischung aus Schritt (c) über einen Zeitraum von etwa 4 bis etwa 20 Stunden.

**2.** Zinkstaub nach Anspruch 1, weiter enthaltend Graphen.

**3.** Verfahren zur Herstellung von Zinkstaub mit verbesserten Farb- und Glanzeigenschaften, umfassend oder bestehend aus den folgenden Schritten:

(a) Bereitstellen eines industriellen Zinkstaubs mit einem Zinkgehalt von wenigstens 99 Gew.-% und einer Partikelgröße von etwa 20 bis etwa 200 µm;
(b) Bereitstellen eines Dispergiermittels;
(c) Überführen der Komponenten (a) und (b) in eine Rührwerkskugelmühle und
(d) Mahlen und Dispergieren der Mischung aus Schritt (c) über einen Zeitraum von etwa 4 bis etwa 20 Stunden.

**4.** Verfahren nach Anspruch 2, **dadurch gekennzeichnet, dass** man als Dispergiermittel Alkylenglykole oder Alkylenglykolalkylether der Formel (I) einsetzt,

$$R^1(CHR^2CH_2O)_nR^3 \qquad (I)$$

in der $R^1$ und $R^2$ unabhängig voneinander für Wasserstoff oder Methyl stehen, $R^3$ für Wasserstoff oder eine Alkylgruppe mit 1 bis 4 Kohlenstoffen steht und n eine ganze Zahl im Bereich von 10 bis 25 bedeutet.

**5.** Verfahren nach den Ansprüchen 3 und/oder 4, **dadurch gekennzeichnet, dass** man als Rührwerkskugelmühle eine Prillmühle einsetzt.

**6.** Verfahren nach mindestens einem der Ansprüche 3 bis 5, **dadurch gekennzeichnet, dass** man eine Rührwerkkugelmühle einsetzt, deren Mahlperlen aus Zirconiumoxid, Wolframcarbid oder Stahl bestehen.

**7.** Verfahren nach mindestens einem der Ansprüche 3 bis 6, **dadurch gekennzeichnet, dass** man die Dispersion über einen Zeitraum von 8 bis 16 Stunden mahlt.

**8.** Verfahren nach mindestens einem der Ansprüche 3 bis 7, **dadurch gekennzeichnet, dass** man die Dispersionen bis auf eine Teilchengröße d50 von weniger als 100 nm mahlt.

**9.** Verfahren nach mindestens einem der Ansprüche 2 bis 7, **dadurch gekennzeichnet, dass** man das Mahlen der Dispersion gemäß Schritt (d) in Gegenwart von Hilfsstoffen durchführt,

**10.** Verfahren nach Anspruch 8, **dadurch gekennzeichnet, dass** man als Hilfsstoffe Fettsäuren und/oder Alumosilikate einsetzt.

**11.** Verfahren nach Anspruch 8, **dadurch gekennzeichnet, dass** man als Hilfsstoff Graphen einsetzt.

**12.** Verfahren nach Anspruch 9, **dadurch gekennzeichnet, dass** man das Graphen in Form einer Dispersion einsetzt.

**13.** Dispersion von Graphen in einem Dispergiermittel, wobei das Dispergiermittel ein Alkylenglykol oder ein Alkylenglykolalkylether der Formel (I) darstellt,

$$R^1(CHR^2CH_2O)_nR^3 \qquad (I)$$

in der $R^1$ und $R^2$ unabhängig voneinander für Wasserstoff oder Methyl stehen, $R^3$ für Wasserstoff oder eine Alkylgruppe mit 1 bis 4 Kohlenstoff steht und n eine ganze Zahl im Bereich von 10 bis 25 bedeutet,

**14.** Zinkflocken enthaltend oder bestehend aus dem Zinkstaub nach Anspruch 1.

**15.** Verwendung des Zinkstaubs nach Anspruch 1 zur Herstellung von Zinkflocken.

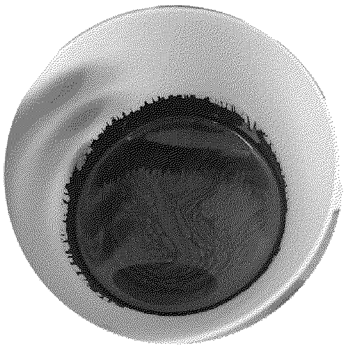

**Abbildung 1A**

Beispiel 1A nach Herstellung

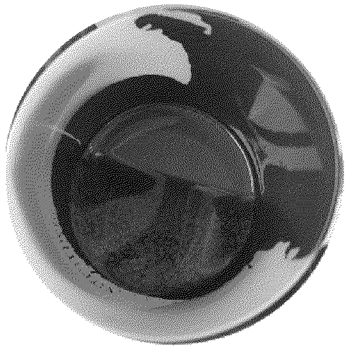

**Abbildung 1B**

Beispiel 1A nach 8 Wochen Lagerung

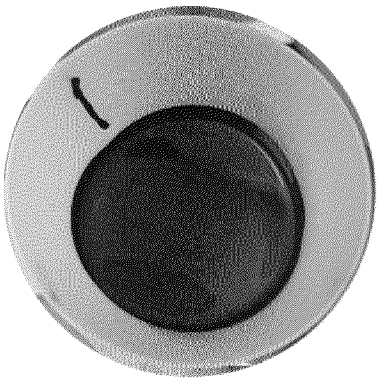

**Abbildung 1C**

Beispiel 1B nach Herstellung

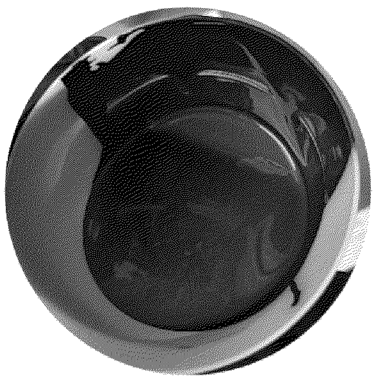

**Abbildung 1D**

Beispiel 1B nach 8 Wochen Lagerung

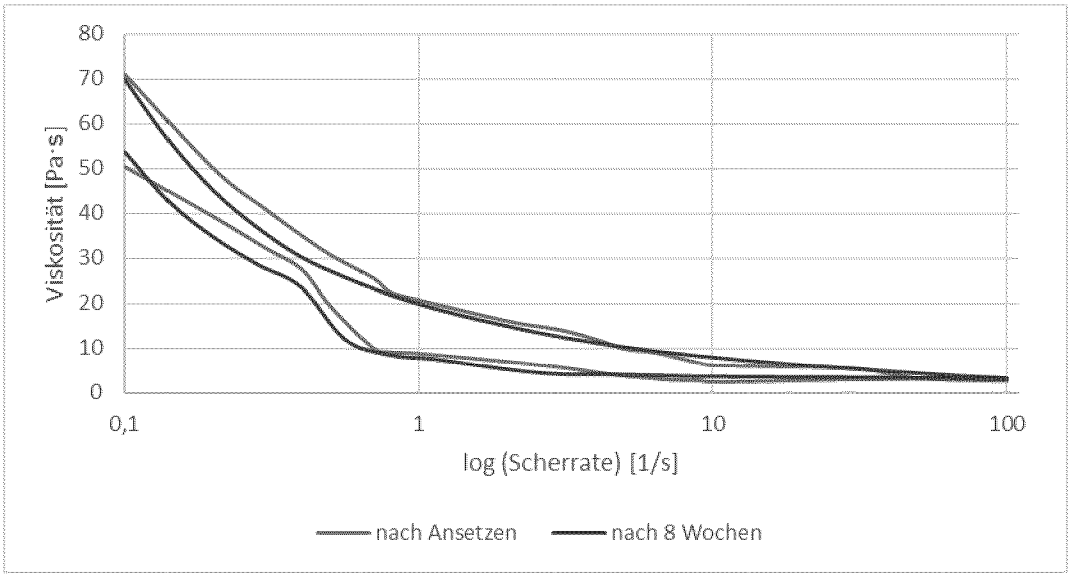


**Abbildung 2**

Viskositätskurve Dispersion nach Beispiel 1A

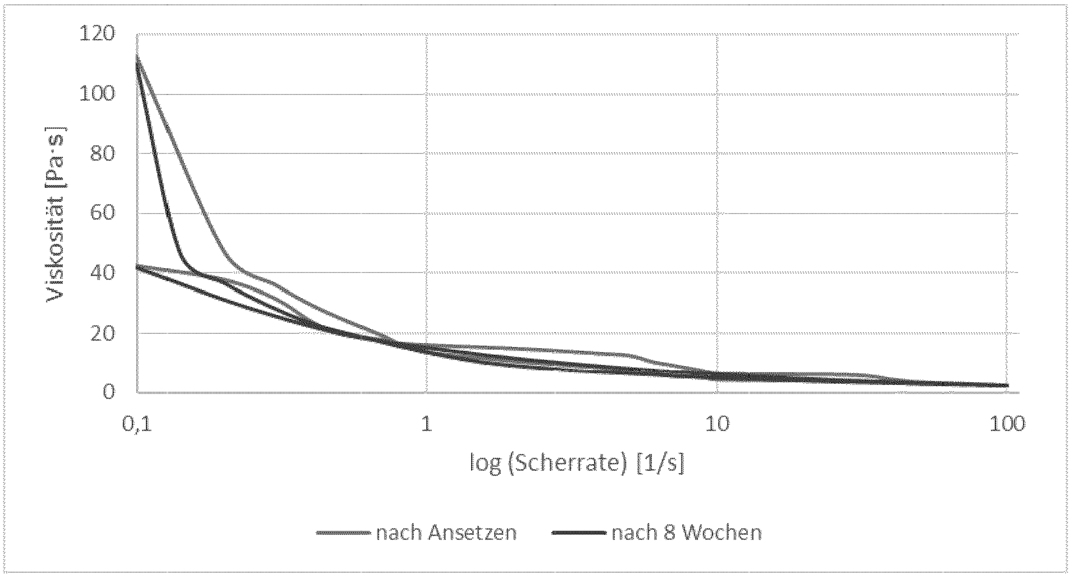


**Abbildung 3**

Viskositätskurve Dispersion nach Beispiel 1B

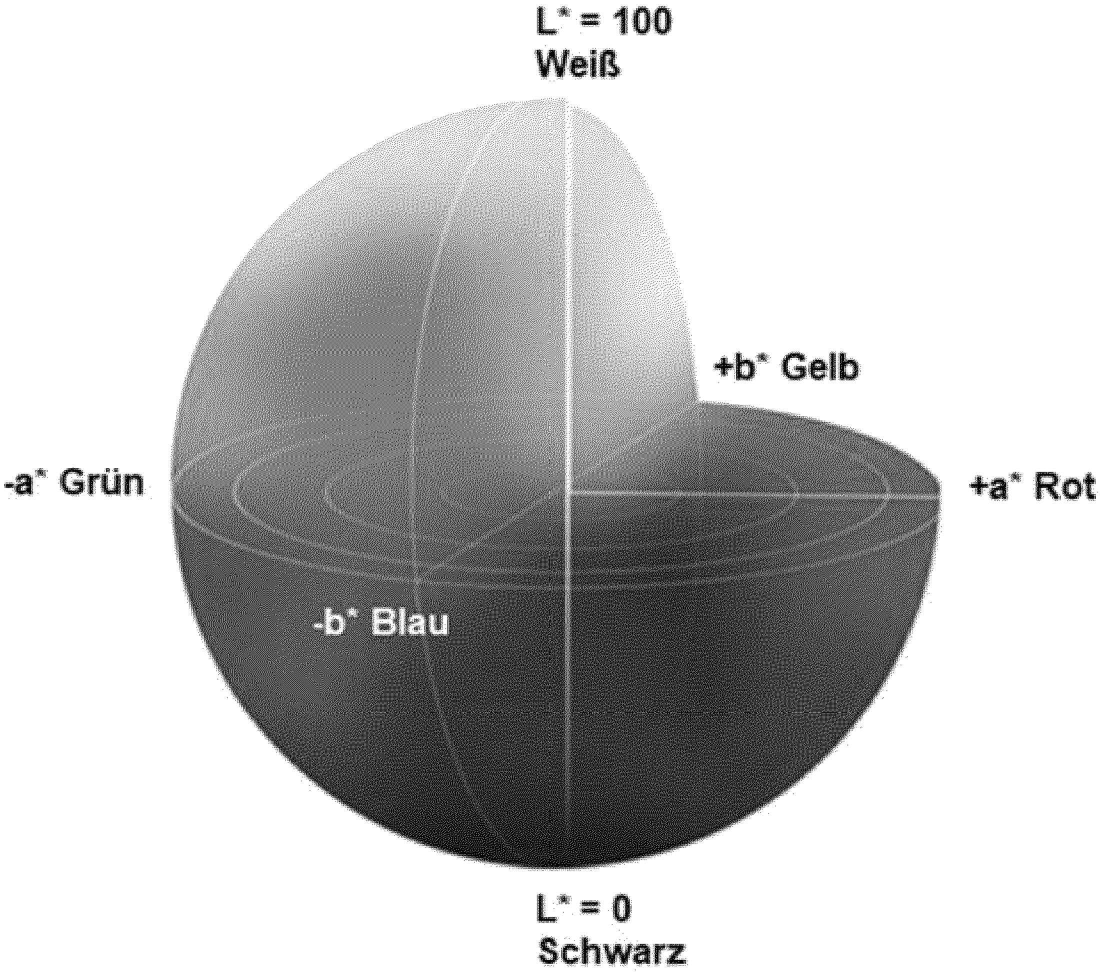


**Abbildung 4**

L*a*b*-Farbraum

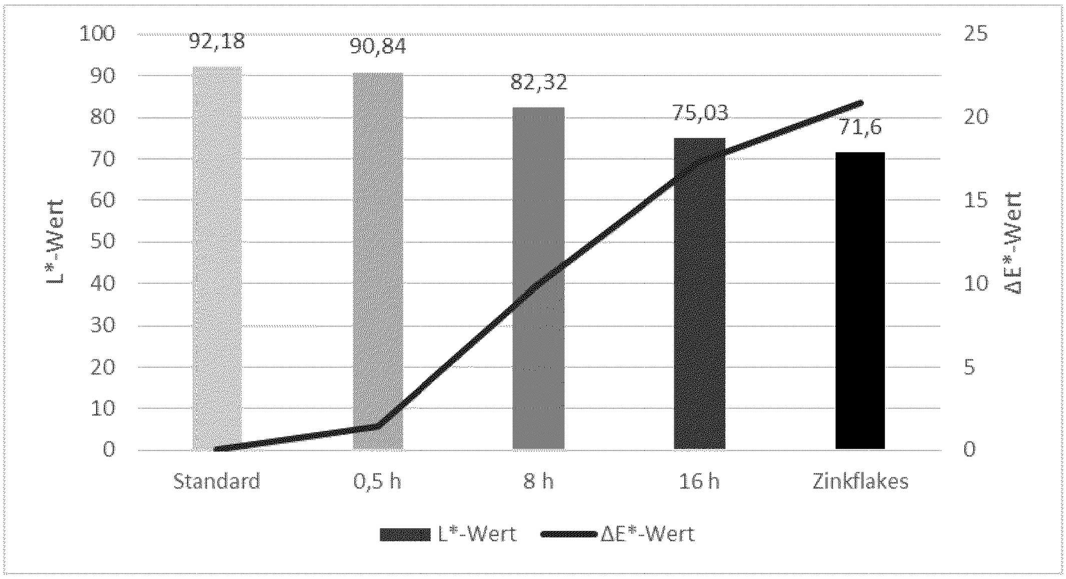


Abbildung 5

Farbwerte IMR Zinkpulver (Beispiel 2A) im Mahlungsprozess mit Wolframcarbidperlen

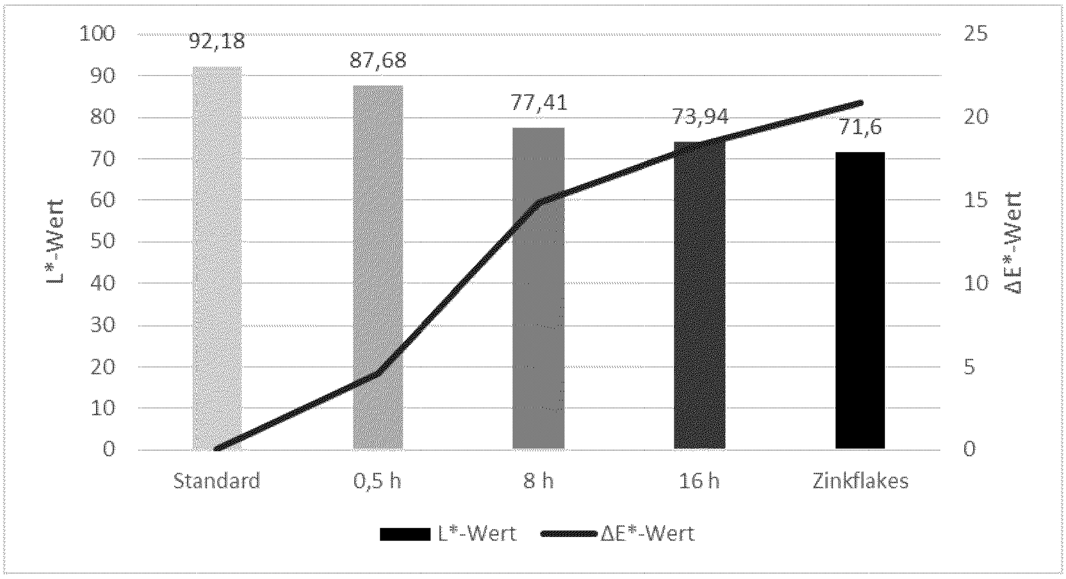


**Abbildung 6**

Farbwerte IMR Zinkpulver (Beispiel 2A) im Mahlungsprozess mit Stahlperlen

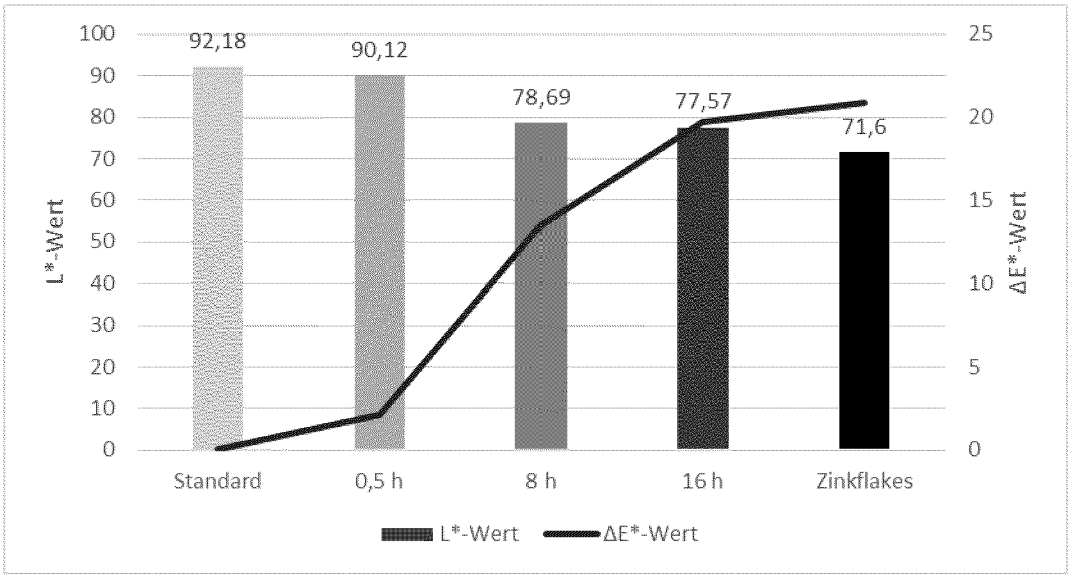


**Abbildung 7**

Farbwerte ECKA Zink (Beispiel 2B) im Mahlungsprozess mit Wolframcarbidperlen

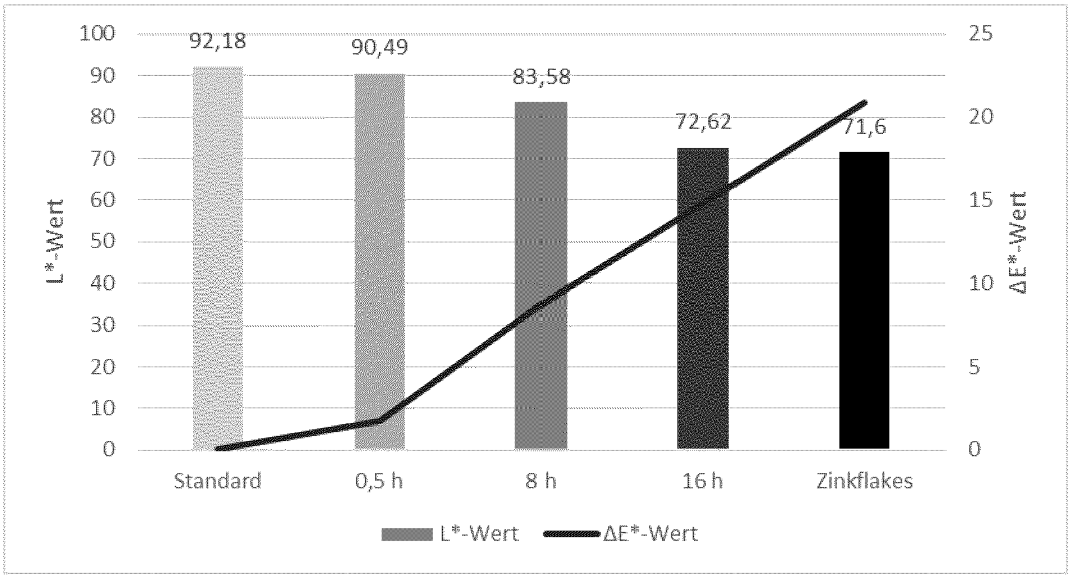


**Abbildung 8**

Farbwerte ECKA Zink (Beispiel 2B) im Mahlungsprozess mit Stahlperlen

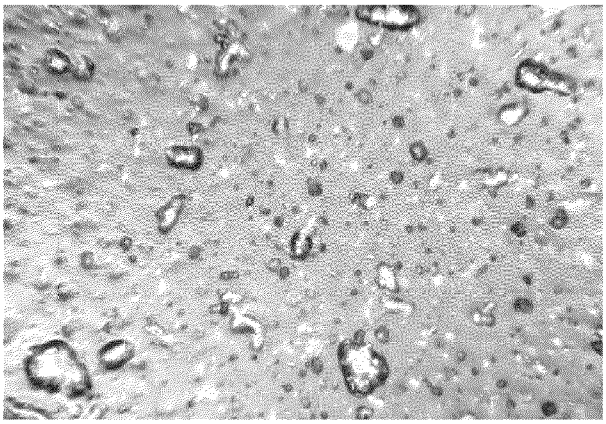

**Abbildung 9A**

IMR-Zinkpulver (Beispiel 2A) nach 30 min. Mahlung mit Wolframcarbidperlen, 500-fache Vergrößerung

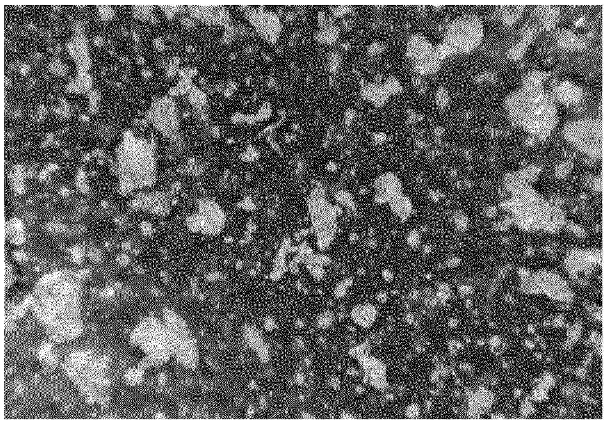

**Abbildung 9B**

IMR-Zinkpulver (Beispiel 2A) nach 16 Stunden Mahlung mit Wolframcarbidperlen, 500-fache Vergrößerung

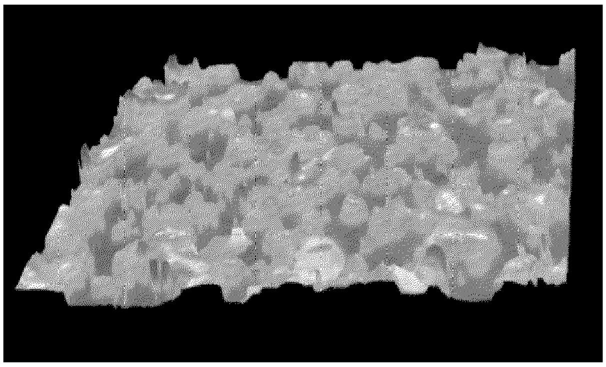

**Abbildung 9C**

IMR-Zinkpulver (Beispiel 2A) nach 30 min. Mahlung mit Wolframcarbidperlen, 1000-fache Vergrößerung, 3D-Darstellung

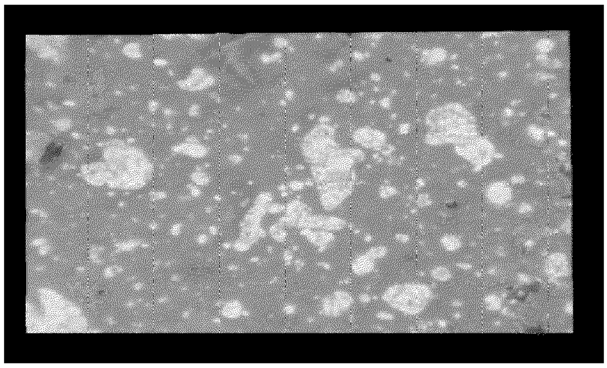

**Abbildung 9D**

IMR-Zinkpulver (Beispiel 2A) nach 16 Stunden Mahlung mit Wolframcarbidperlen, 1000-fache Vergrößerung, 3D-Darstellung

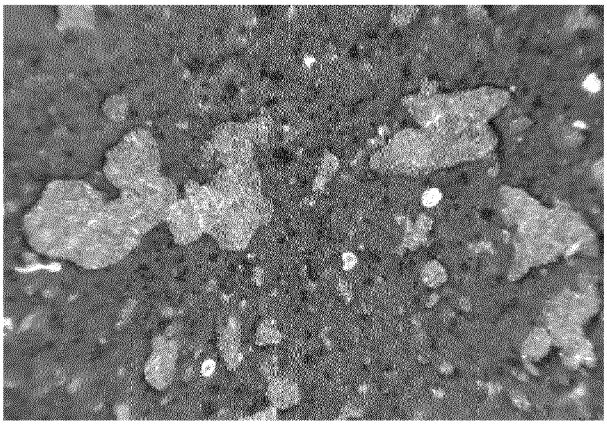

**Abbildung 10A**

ECKA-Zink (Beispiel 2B) nach 16 Stunden Mahlung mit Wolframcarbidperlen, 500-fache Vergrößerung

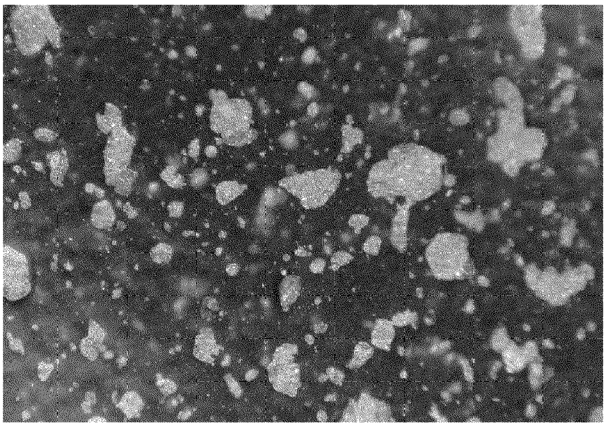

**Abbildung 10B**

ECKA-Zink (Beispiel 2B) nach 16 Stunden Mahlung mit Stahlperlen, 500-fache Vergrößerung

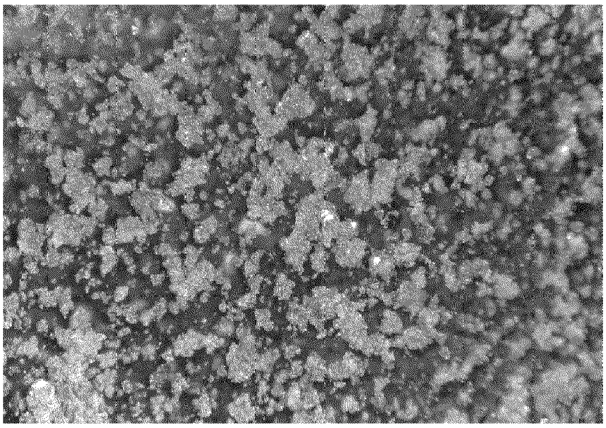

**Abbildung 11A**

ProFlake Zn 2000 (Vergleichsbeispiel), 500-fache Vergrößerung

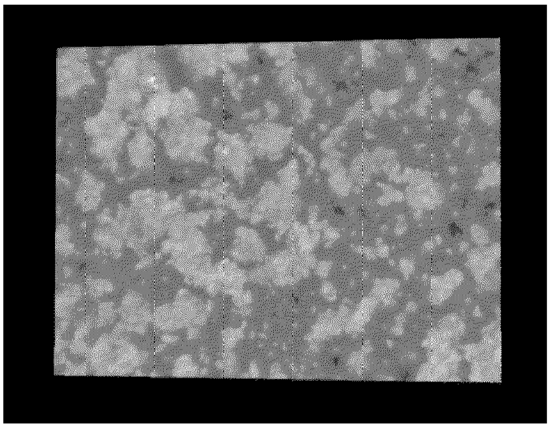

**Abbildung 11B**

ProFlake Zn 2000 (Vergleichsbeispiel), 1000-fache Vergrößerung, 3D-Darstellung

Europäisches Patentamt
European Patent Office
Office européen des brevets

# EUROPÄISCHER RECHERCHENBERICHT

Nummer der Anmeldung

EP 25 20 2388

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | CN 109 836 964 B (SHANGHAI ZHENHUA HEAVY IND CHANGZHOU COATINGS CO LTD) 28. Mai 2021 (2021-05-28)<br>* das ganze Dokument *<br>----- | 1-4,7-9, 11,12, 14,15 | INV.<br>C01B32/184<br>C01B32/194<br>C09C1/04<br>C09C1/62<br>C09C3/08<br>C09C3/10 |
| X | US 4 820 552 A (ESPINOSA-C JOSE G [MX] ET AL) 11. April 1989 (1989-04-11)<br>* Beispiel 1 *<br>* Spalte 1, Zeile 6 - Spalte 3 *<br>----- | 1,3,4, 7-10,14, 15 | |
| X | CN 118 620 434 A (XIAMEN ZHONGYI HONGPU TECH CO LTD; APPLIED CARBON NANO CO LTD) 10. September 2024 (2024-09-10)<br>* das ganze Dokument *<br>----- | 1-3,5-9, 11,14,15 | |
| X | CN 112 555 944 A (HEXIAN YIMAI CARBON IND CO LTD) 26. März 2021 (2021-03-26)<br>* das ganze Dokument *<br>----- | 13 | |

| RECHERCHIERTE SACHGEBIETE (IPC) |
|---|
| C01B<br>C09C |

Der vorliegende Recherchenbericht wurde für alle Patentansprüche erstellt

1

| Recherchenort | Abschlußdatum der Recherche | Prüfer |
|---|---|---|
| Den Haag | 29. Januar 2026 | Marino, Emanuela |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 25 20 2388

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

29-01-2026

| Im Recherchenbericht angeführtes Patentdokument | Datum der Veröffentlichung | Mitglied(er) der Patentfamilie | Datum der Veröffentlichung |
|---|---|---|---|
| CN 109836964 B | 28-05-2021 | KEINE | |
| US 4820552 A | 11-04-1989 | KEINE | |
| CN 118620434 A | 10-09-2024 | CN 118620434 A | 10-09-2024 |
| | | KR 20240137851 A | 20-09-2024 |
| CN 112555944 A | 26-03-2021 | KEINE | |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 21104975 A1
- CN 109836964 B, SHANGHAI ZHENHUA